(19) Europäisches Patentamt
European Patent Office
Office européen des brevets

(11) **EP 4 105 756 A1**

(12) **EUROPEAN PATENT APPLICATION**
published in accordance with Art. 153(4) EPC

(43) Date of publication:
**21.12.2022 Bulletin 2022/51**

(51) International Patent Classification (IPC):
***G05D 1/08*** (2006.01)    ***G05B 19/19*** (2006.01)

(21) Application number: **21863334.5**

(86) International application number:
**PCT/CN2021/102721**

(22) Date of filing: **28.06.2021**

(87) International publication number:
**WO 2022/048266 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.09.2020 CN 202010927326**

(71) Applicant: **Tencent Technology (Shenzhen)
Company Limited
Shenzhen, Guangdong 518057 (CN)**

(72) Inventors:
• **ZHENG, Yu
  Shenzhen, Guangdong 518057 (CN)**
• **JIANG, Xinyang
  Shenzhen, Guangdong 518057 (CN)**
• **CHI, Wanchao
  Shenzhen, Guangdong 518057 (CN)**
• **ZHANG, Zhengyou
  Shenzhen, Guangdong 518057 (CN)**

(74) Representative: **EP&C
P.O. Box 3241
2280 GE Rijswijk (NL)**

(54) **METHOD, APPARATUS AND DEVICE FOR CONTROLLING MOVEMENT OF LEGGED ROBOT, AND MEDIUM**

(57) Provided are a method, apparatus and device for controlling the movement of a legged robot, and a medium, which relate to the technical field of robots. The method comprises: acquiring centroid state data respectively corresponding to a spatial path start point and a spatial path end point of a movement path; on the basis of the spatial path start point and the spatial path end point, determining a target landing point for each foot end in the movement path; on the basis of the centroid state data, determining a change relationship between a centroid position change coefficient and a foot end contact force; under the constraint of a constraint condition set, screening for a target centroid position change coefficient that meets the change relationship, wherein the constraint condition set comprises a spatial landing point constraint condition, and the spatial landing point constraint condition is used for constraining the value of the centroid position change coefficient, such that a legged robot can reach a determined target landing point; determining a target movement control parameter according to the target centroid position change coefficient and the target landing point of each foot end; and on the basis of the target movement control parameter, controlling the legged robot to move according to the movement path.

FIG. 5

Processed by Luminess, 75001 PARIS (FR)

**Description**

This application claims priority to Chinese Patent Application No. 2020109273264, entitled "METHOD, APPARATUS AND DEVICE FOR CONTROLLING MOVEMENT OF LEGGED ROBOT, AND MEDIUM" and filed with the China National Intellectual Property Administration on September 7, 2020, which is incorporated herein by reference in its entirety.

FIELD OF THE TECHNOLOGY

This disclosure relates to the field of robot technologies, and in particular, to a technology for controlling motion of a legged robot.

BACKGROUND OF THE DISCLOSURE

With continuous development of computer technologies, various robots are gradually developed, such as a commonly-known legged robot. How to control motion of a robot is an issue that always gains attention in the robot field. For controlling the motion of a legged robot, a center-of-mass motion track of the legged robot generally needs to be determined, so as to control the legged robot according to the center-of-mass motion track.

In the related art, generally center-of-mass positions of a legged robot are obtained by using a motion equation of the robot, so as to determine a center-of-mass motion track. However, the center-of-mass motion track obtained by using the motion equation of the legged robot is not highly fitted with a real motion environment of the legged robot, and therefore, it is difficult for the legged robot to complete motion under control of the center-of-mass motion track, that is, the center-of-mass position generated in the related art has poor adaptability to the real environment.

SUMMARY

Embodiments of the present disclosure provide a method, an apparatus, and a device for controlling motion of a legged robot, and a medium, so as to improve adaptability of a generated center-of-mass position to a real environment.

According to an aspect, an embodiment of the present disclosure provides a method for controlling motion of a legged robot, performed by a control device and including:

acquiring center-of-mass state data corresponding to a spatial path start point of a motion path and center-of-mass state data corresponding to a spatial path end point of the motion path;

determining a target foothold for each foot end in the motion path based on the spatial path start point and the spatial path end point;

determining a change relationship between a center-of-mass position change coefficient and a foot end contact force based on the center-of-mass state data respectively corresponding to the spatial path start point and the spatial path end point;

selecting, under constraint of a constraint condition set, a target center-of-mass position change coefficient that meets the change relationship, the constraint condition set including at least a spatial foothold constraint condition, and the spatial foothold constraint condition being used for constraining a value of the center-of-mass position change coefficient to control the legged robot to reach the target foothold;

determining a target motion control parameter according to the target center-of-mass position change coefficient and the target foothold for each foot end; and

controlling, based on the target motion control parameter, motion of the legged robot along the motion path.

According to another aspect, an embodiment of the present disclosure provides an apparatus for controlling motion of a legged robot, where the apparatus includes:

an acquiring module, configured to acquire center-of-mass state data corresponding to a spatial path start point of a motion path and center-of-mass state data corresponding to a spatial path end point of the motion path;

a first determining module, configured to determine a target foothold for each foot end in the motion path based on the spatial path start point and the spatial path end point;

a second determining module, configured to determine a change relationship between a center-of-mass position change coefficient and a foot end contact force based on the center-of-mass state data respectively corresponding to the spatial path start point and the spatial path end point;

a selection module, configured to select, under constraint of a constraint condition set, a target center-of-mass position change coefficient that meets the change relationship; the constraint condition set including at least a spatial foothold constraint condition, and the spatial foothold constraint condition being used for constraining a value of the center-of-mass position change coefficient to control the legged robot to reach the target foothold;

a fourth determining module, configured to determine a target motion control parameter according to the target center-of-mass position change coefficient and the target foothold for each foot end; and

a control module, configured to control, based on the target motion control parameter, motion of the legged robot along the motion path.

According to still another aspect, an embodiment of the present disclosure provides a device for controlling motion of a legged robot, including:

a memory; and

at least one processor connected to a collecting component and the memory;

the memory storing instructions executable by the at least one processor, and the at least one processor being configured to execute the instructions stored in the memory to perform the method according to the above aspect.

According to still another aspect, an embodiment of the present disclosure provides a storage medium, storing computer instructions that when run on a computer, cause the computer to perform the method according to the above aspect.
According to still another aspect, an embodiment of the present disclosure provides a computer program product, including instructions that when run on a computer, cause the computer to perform the method according to the above aspect.
With the foregoing technical solutions used in the embodiments of the present disclosure, at least the following technical effects are obtained.
In the embodiments of the present disclosure, a change relationship between a foot end contact force of a legged robot and a center-of-mass position change coefficient is determined according to center-of-mass state data at a spatial path start point and center-of-mass state data at a spatial path end point of the legged robot, and a center-of-mass position change coefficient of the legged robot is determined according to the change relationship and a constraint condition set, so as to determine a center-of-mass position of the legged robot at each moment. Because the constraint condition set includes a spatial foothold constraint condition, the determined center-of-mass position is always reachable by the legged robot, so that a determined center-of-mass motion track of the legged robot matches an actual motion process of the legged robot, and adaptability of the determined center-of-mass position to an actual motion environment is improved. In addition, in the embodiments of the present disclosure, the center-of-mass motion track of the legged robot can be automatically generated, and motion of the legged robot along a specified target foothold can be controlled, thereby improving intelligence of the legged robot.

BRIEF DESCRIPTION OF THE DRAWINGS

FIG. 1 is an example diagram of an application scenario of a method for controlling motion of a legged robot according to an embodiment of the present disclosure.

FIG. 2 is an example diagram of a structure of a control device according to an embodiment of the present disclosure.

FIG. 3A is an example diagram of a first space obtained by performing fitting on positions according to an embodiment of the present disclosure.

FIG. 3B is an example diagram of a support plane determined based on FIG. 3A according to an embodiment of the present disclosure.

FIG. 3C is an example diagram of a first pentahedron determined based on FIG. 3B according to an embodiment of the present disclosure.

FIG. 3D is an example diagram of a convex polyhedron determined based on FIG. 3C according to an embodiment of the present disclosure.

FIG. 4 is an example diagram of a structure of a legged robot according to an embodiment of the present disclosure.

FIG. 5 is a flowchart of a method for controlling motion of a legged robot according to an embodiment of the present disclosure.

FIG. 6 is a schematic diagram of sampling moments according to an embodiment of the present disclosure.

FIG. 7 is a schematic diagram of a center-of-mass motion track according to an embodiment of the present disclosure.

FIG. 8 is a schematic structural diagram of an apparatus for controlling motion of a legged robot according to an embodiment of the present disclosure.

FIG. 9 is a schematic structural diagram of a device for controlling motion of a legged robot according to an embodiment of the present disclosure.

DESCRIPTION OF EMBODIMENTS

For better understanding of the technical solutions provided in the embodiments of the present disclosure, description is made in detail below with reference to the accompanying drawings of the specification and specific implementations.

To facilitate a person skilled in the art to better understand the technical solutions of the present disclosure, the following describes terms involved in this disclosure.

A robot is a machine (such as a robot dog or a robot cat) that simulates human behavior or ideologically simulates other creatures. In a broad sense, some computer programs are also referred to as robots. In the contemporary industry, a robot refers to an artificial robot that can automatically execute a task, and is used for replacing or assisting a human to work, which may be an electromechanical apparatus, or is controlled by a computer program or an electronic circuit.

A legged robot generally refers to a robot having a foot end. The legged robot may be configured with one or more foot ends, for example, two feet, four feet, or six feet. Each foot end is configured with one or more joints.

A motion path refers to a motion path to be completed by a legged robot. A length of the motion path may be any, which is not specifically limited. A moving time period required by the legged robot to complete the motion path is considered as a sampling period. The moving time period includes a plurality of moments. When determining a center-of-mass position, a sampling moment may be selected from the plurality of moments included in the moving time period.

A spatial path start point may also be referred to as a start position, referring to a position at which a robot starts to move along a motion path. A moment corresponding to the spatial path start point may be referred to as a start moment.

A spatial path end point may also be referred to as an end position, referring to a position at which a robot stops moving along a motion path. A moment corresponding to the spatial path end point may be referred to as an end moment.

A center-of-mass state data refers to data used for describing a change of a center-of-mass state of a robot and may specifically include one or more of a center-of-mass position, a center-of-mass speed, or a center-of-mass acceleration of the robot. The center-of-mass position is a central position of mass of the robot, and is used for describing a position of the robot. In different motion states, the center-of-mass position of the robot changes. The center-of-mass speed may be obtained by performing first-order derivation on the center-of-mass position change with respect to time interval, and the center-of-mass acceleration may be obtained by performing second-order derivation on the center-of-mass position change with respect to time interval. For ease of description, the center-of-mass position at the spatial path start point may be referred to as a start center-of-mass position, the center-of-mass speed at the spatial path start point may be referred to as a start center-of-mass speed, and the center-of-mass acceleration at the spatial path start point may be referred to as a start center-of-mass acceleration. Likewise, the center-of-mass position at the spatial path end point may be referred to as an end center-of-mass position, the center-of-mass speed at the spatial path end point may be referred to as an end center-of-mass speed, and the center-of-mass acceleration at the spatial path end point may be referred to as an end center-of-mass acceleration.

A target foothold may also be referred to as a foothold, referring to a position at which a foot end of a robot contacts a contact surface when the foot end of the robot contacts the contact surface. For example, at a moment, a first foot end of the robot is in contact with the contact surface, and a foothold corresponding to the first foot end of the robot is point A.

A center-of-mass position change coefficient is a parameter used for describing a center-of-mass position change with time. The center-of-mass position change coefficient is represented in a matrix form, or is represented in a vector form, or the like. The center-of-mass position change coefficient and a time interval can jointly represent a center-of-mass position at a specific moment. The time interval refers to a time difference between the specific moment and a moment corresponding to the spatial path start point.

A contact surface refers to a surface on which a foot end of a robot contacts an environment, such as a ground or another support that contacts the foot end. In a condition of an uneven road surface or other conditions, contact surfaces corresponding to a plurality of foot ends of a legged robot may be different.

A center-of-mass motion track is used for describing center-of-mass positions of a robot at different moments, and includes the center-of-mass positions of the robot at different moments.

A contact point may also be referred to as a dropped foot end, referring to a foot end of a robot that is in contact with a contact surface, and a quantity of foot ends that are in contact with the contact surface is a quantity of contact points. Certainly, the foot ends of the robot that are in contact with the contact surface at different moments are not completely the same.

A stepping sequence is used for describing a gait state of a robot in a process of completing a motion path, and specifically includes at least one motion stage in a process of the robot moving along the motion path, and a time period of each motion stage.

A foot end contact force refers to a contact force between a foot end of a robot in contact with a contact surface and the contact surface.

A constraint condition set includes one or more constraint conditions, where the constraint condition is a relational expression used for constraining a value of a center-of-mass position change coefficient. The constraint condition set in the embodiments of the present disclosure includes at least a spatial foothold constraint condition, and the spatial foothold constraint condition is used for constraining the center-of-mass position change coefficient, so that a robot can reach a target foothold. The spatial foothold constraint condition is related to the center-of-mass position change coefficient of the robot.

A target motion control parameter is a parameter required for controlling motion of a legged robot, which includes a joint angle of the legged robot at any moment, a joint torque at any moment, and the like.

In addition, "a plurality of" in the embodiments of the present disclosure refers to two or more, "at least one" refers to one or more, and "A and/or B" specifically refers to three cases: A, B, and A plus B.

The following describes a design idea of the embodiments of the present disclosure.

To improve adaptability of a generated center-of-mass position to an actual environment, the embodiments of the present disclosure provide a method for controlling motion of a legged robot. In this method, a target foothold for each foot down of a legged robot is first determined. A change relationship between a center-of-mass position change coefficient and a foot end contact force is determined according to center-of-mass state data of the legged robot at a spatial path start point and center-of-mass state data at a spatial path end point on a motion path. Based on a plurality of candidate footholds, a target center-of-mass position change coefficient of the legged robot is determined by using the change relationship and a constraint condition set. Further, a target motion control parameter is determined according to the target center-of-mass position change coefficient and the target foothold. The target motion control parameter is used for controlling motion of the legged robot along the motion path.

In the embodiments of the present disclosure, the constraint condition set is used for considering a workspace of a foothold of the legged robot, so that when the legged robot is controlled based on the determined center-of-mass position, the legged robot can reach the target foothold, thereby improving adaptability of the determined center-of-mass position to an actual motion environment. In addition, the method implements automatic generation of the center-of-mass position and even the center-of-mass motion track of the legged robot, so that the legged robot moves along the selected target foothold, thereby improving automation of the legged robot. Further, in the embodiments of the present disclosure, quadratic programming is constructed according to the change relationship, the constraint condition set, and an objective function, and the target center-of-mass position change coefficient is determined by solving the quadratic programming. If there is a solution to the quadratic programming, a global optimal solution can be obtained. Therefore, the finding a target center-of-mass position change coefficient is converted into solving the quadratic programming, so that the optimal target center-of-mass position change coefficient can be obtained.

Based on the foregoing design idea, the following describes an application scenario of a method for controlling motion of a legged robot in an embodiment of the present disclosure.

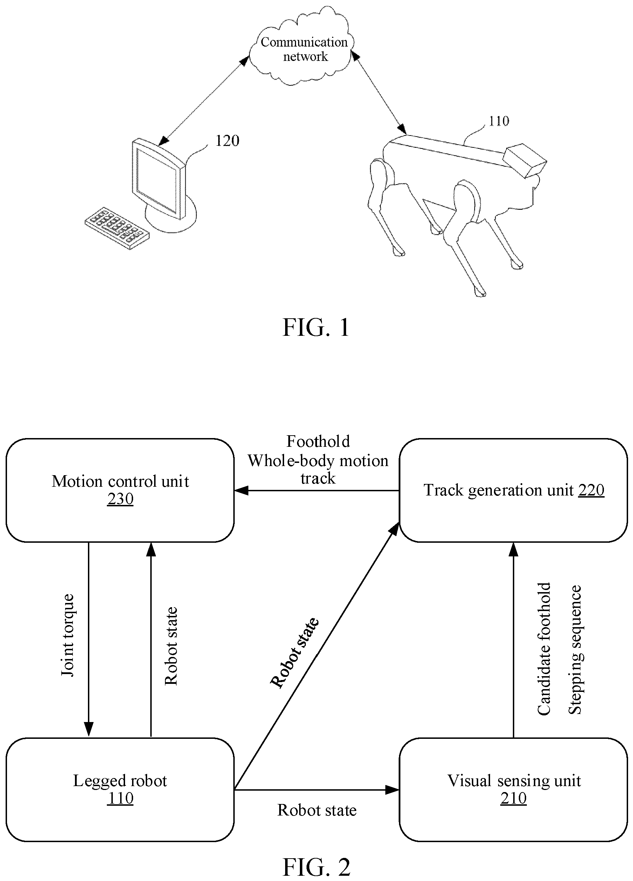

Referring to FIG. 1, FIG. 1 is an application scenario diagram of a method for controlling motion of a legged robot, or may be understood as an architecture diagram of a legged robot motion control system. The architecture includes a legged robot 110 and a control device 120. The following describes examples of interaction process between the control device 120 and the legged robot 110.

In a possible case, the control device 120 and the legged robot 110 may be two relatively independent devices.

In this case, wired or wireless communication may be performed between the legged robot 110 and the control device 120. FIG. 1 show an example that communication between the legged robot 110 and the control device 120 is implemented by using a communications network.

Before the legged robot 110 is controlled to move, the control device 120 may set center-of-mass state data of the legged robot 110 at a spatial path start point and center-of-mass state data at a spatial path end point of the motion path according to an operation performed by a user or a task to be performed by the legged robot 110. Alternatively, the legged robot 110 may detect the center-of-mass state data at the spatial path start point, and upload the center-of-mass state data at the spatial path start point to the control device 120. Alternatively, the control device 120 directly collects the center-of-mass state data of the legged robot 110 at the spatial path start point.

Further, the control device 120 collects an environment image of the legged robot 110, or receives the environment image reported by the legged robot 110. Then the control device 120 determines, according to the environment image, a target foothold at which a foot end of the legged robot 110 to be dropped down in a motion path. Certainly, there are various manners in which the control device 120 determines the target foothold. Details are described below.

The control device 120 determines a center-of-mass motion track of the legged robot 110 according to the center-of-mass state data at the spatial path start point and the center-of-mass state data at the spatial path end point, and the foothold, so as to control the legged robot 110 to perform corresponding motion. The following describes content of determining the center-of-mass motion track and the foothold.

The control device 120 may be implemented by using a server or a terminal. The server includes but is not limited to: an independent physical server, a server cluster formed by a plurality of physical servers, or a distributed system, or may be a cloud server that provides a basic cloud computing service. The terminal may be, for example, a mobile phone, a personal computer, a smart TV, or a portable tablet computer.

In another possible case, the control device 120 may be part of the legged robot 110.

The control device 120 may be disposed in the body of the legged robot 110. For example, the control device 120 is an internal processor in the legged robot 110.

Before the control device 120 controls the legged robot 110 to move, the control device 120 may receive a motion instruction from an upper computer, or obtain a motion instruction according to an input operation of a user, where the motion instruction may instruct the legged robot 110 to execute a task, or may indicate the spatial path start point and the spatial path end point in the motion path of the legged robot 110. The upper computer may be any device that is connected to the control device 120 in a wired or wireless manner. The upper computer may be, for example, a terminal or a server.

The control device 120 collects the center-of-mass state data of the legged robot 110 at the spatial path start point and center-of-mass state data at the spatial path end point. Further, the control device 120 may determine, according to the environment image of the environment in which the legged robot 110 is currently located, a target foothold of the foot end for each foot-down of the legged robot 110. The control device 120 determines the center-of-mass motion track of the legged robot according to the center-of-mass state data at the spatial path start point, the center-of-mass state data at the spatial path end point and the target foothold, so as to control the legged robot 110 to perform motion. Content of determining the center-of-mass motion track is described below.

To describe a structure of the control device 120 more clearly, the following provides an example with reference to a legged robot motion control system shown in FIG. 2. FIG. 2 shows an example that the control device 120 includes a visual sensing unit 210, a track generation unit 220, and a motion control unit 230.

The visual sensing unit 210 may be disposed on the legged robot 110, for example, mounted on the head of the legged robot 110. The visual sensing unit 210 may be, for example, one or more of a camera and an infrared camera. The camera is, for example, an RGBD camera.

The visual sensing unit 210 may collect a robot state. The robot state includes the center-of-mass state data of the legged robot 110 at the spatial path start point and the center-of-mass state data of the legged robot 110 at the spatial path end point. The visual sensing unit 210 may further collect the environment image of the environment in which the legged robot 110 is located, obtain a target foothold for each foot-down of the legged robot 110 according to the environment image, and obtain a stepping sequence of the legged robot 110 according to the motion path of the legged robot 110.

After the center-of-mass state data, the environment image, and the stepping sequence are obtained, the visual sensing unit 210 may send the data to the track generation unit 220. The track generation unit 220 receives the state data of the robot, the stepping sequence and the target foothold, and determines center-of-mass positions of the legged robot 110 at a plurality of moments according to the state data of the robot, the stepping sequence, and the target foothold, to obtain the center-of-mass motion track of the legged robot 110, and further determine a whole-body motion track of the legged robot 110. Then the track generation unit 220 sends the whole-body motion track to the motion control unit 230.

The motion control unit 230 may determine a joint torque of each joint on the legged robot 110 according to the whole-body motion track and a target foothold, and control each joint of the legged robot 110 to rotate according to the joint torque, so as to implement motion of the legged robot 110.

Further, the motion control unit 230 may further monitor the state of the legged robot in real time during the motion of the legged robot 110, so as to ensure that the legged robot 110 can move stably.

Based on the foregoing application scenario, the following describes a general idea of the motion control method provided in the embodiment of the present disclosure.

In this embodiment of the present disclosure, a target foothold is pre-selected, and a center-of-mass position of the legged robot 110 at each moment is converted into a relationship among a center-of-mass position change coefficient, a start center-of-mass position, and a time interval between the moment and a moment corresponding to the start center-of-mass position. According to the center-of-mass state data, a relationship between a center-of-mass position and a foot end contact force is converted into a change relationship between a center-of-mass position change coefficient and a foot end contact force, and the center-of-mass position change coefficient is obtained based on the change relationship and a constraint condition set, so as to obtain the center-of-mass motion track of the legged robot 110 according to the center-of-mass position change coefficient, determine a target motion control parameter of the legged robot 110 according to the center-of-mass motion track and the target foothold, and control motion of the legged robot 110 by using the target motion control parameter.

Further, in determining the center-of-mass position change coefficient, the determining the center-of-mass position change coefficient may be converted into a mixed integer quadratic programming problem with reference to the constraint condition set and the change relationship, so as to obtain the center-of-mass position by solving the quadratic programming problem. The change relationship and the constraint condition set are preconfigured in the control device 120, or acquired by the control device 120 from another device or a network resource, or created by the control device 120. The following provides an example of a manner in which the control device 120 creates the change relationship and the constraint condition set.

I. Obtain the change relationship

The control device 120 may obtain, from a network resource or another device, a relational expression between a center-of-mass position and a foot end contact force at each moment. For the meaning of the foot end contact force, one may refer to the foregoing description. Details are not described herein again. The center-of-mass position at each moment in the relational expression is represented by using the start center-of-mass position, the center-of-mass position change coefficient, and a time interval, so that the relational expression between a center-of-mass position and a foot end contact force at each moment is converted into a change relationship between the center-of-mass position change coefficient and the foot end contact force. The change relationship is used for indicating the change relationship between the center-of-mass position change coefficient and the foot end contact force. After the change relationship is obtained, the control device 120 may store the change relationship in any form, such as a function form, a description statement form, or the like. The following describes a process of creating the change relationship by the control device 120 by using a specific example.

1: Obtain a first relational expression of the legged robot 110.

The first relational expression is a center-of-mass dynamics equation of the legged robot 110, and is used for representing a relationship between a motion state of the legged robot 110 and an external force received. The first relational expression may have a plurality of expressions, such as the Newton-Euler equation. An example of the first relational expression is as follows:

$$\begin{bmatrix} m(\ddot{p}_G - g) \\ \dot{L} \end{bmatrix} = \sum_{i=1}^{N_c} \begin{bmatrix} I_{3\times3} \\ \hat{r}_i - \hat{p}_G \end{bmatrix} f_i \tag{1}$$

where m is total mass of the legged robot 110, $g \in R^3$ is a gravity acceleration, $p_G \in R^3$ is the center-of-mass position of the legged robot 110, $\hat{r}_i \in R^3$ is a position of the legged robot 110 and an i-th contact point of the contact surface, or may be referred to as a target foothold, which indicates a position of a foot end in contact with the contact surface, L

$\in R^3$ is a center-of-mass angular momentum of the legged robot 110, L indicates first-order derivation on the angular momentum with respect to time interval, $f_i \in R^3$ is a foot end contact force of the i-th contact point, $N_c$ is a quantity of target footholds, $\widehat{(\ )}$ represents a diagonal matrix of ( ), and $\ddot{p}_G$ indicates second-order derivation on $p_G$ with respect to time interval. $R^3$ represents a vector represented by three coordinate values.

In a case in which no specific description is provided, all variables in this embodiment of the present disclosure are represented in a world coordinate system. For example, each variable in the foregoing formula (1) is a representation in the world coordinate system.

Further, the first three rows in the formula (1) are obtained according to Newton's law, and the last three rows are obtained according to the Euler equation. Newton's law and Euler's equation together describe the relationship between the motion of the robot and the external force received.

Further, it can be learned from the first three rows of the formula (1): $m(\ddot{p}_G - g) = \sum_{i=1}^{N_c} f_i$, which is substituted into the last three rows of formula (1) to obtain the following formula:

$$\begin{bmatrix} m(\ddot{p}_G - g) \\ m\widehat{p_G}(\ddot{p}_G - g) + \dot{L} \end{bmatrix} = \sum_{i=1}^{N_c} \begin{bmatrix} I_{3\times3} \\ \widehat{r_i} \end{bmatrix} f_i = Gf \qquad (2)$$

where,

$$G = \begin{bmatrix} I_{3\times3} & I_{3\times3} & \cdots & I_{3\times3} \\ \widehat{r_1} & \widehat{r_2} & \cdots & \widehat{r_{Nc}} \end{bmatrix} \in R^{6\times3Nc}, \quad f = \begin{bmatrix} f_1 \\ f_2 \\ \vdots \\ f_n \end{bmatrix} \in R^{3Nc} \qquad (3)$$

2: The center-of-mass position at each moment in the first relational expression is represented as a sum of the start center-of-mass position and a center-of-mass position change amount within the time interval t, to obtain a second relational expression.

The center-of-mass position is represented as the sum of the center-of-mass position of the start position and the center-of-mass position change amount corresponding to the time interval t, which is specifically:

$$p_G = p^{init} + p_t \qquad (4)$$

$p^{init}$ represents the start center-of-mass position, and $p_t$ represents the center-of-mass position change amount corresponding to the time interval t.

The formula (4) is substituted into the formula (2), and an example of the second relational expression is obtained as follows:

$$Gf = m \begin{bmatrix} \ddot{p}_t \\ \hat{p}^{init}\ddot{p}_t + \hat{g}p_t \end{bmatrix} - m \begin{bmatrix} g \\ \hat{p}^{init}g \end{bmatrix} + \begin{bmatrix} 0_{3\times3} \\ \dot{L} \end{bmatrix} + \begin{bmatrix} 0_{3\times1} \\ m\hat{p}_t\ddot{p}_t \end{bmatrix} \qquad (5)$$

The following analyzes the terms in the foregoing second relational expression.

The first term $m \begin{bmatrix} \ddot{p}_t \\ \hat{p}^{init}\ddot{p}_t + \hat{g}p_t \end{bmatrix}$ is in a linear relationship with $\ddot{p}_t$ and $p_t$, the second term $m \begin{bmatrix} g \\ \hat{p}^{init}g \end{bmatrix}$ is a constant term, the third term $\begin{bmatrix} 0_{3\times3} \\ \dot{L} \end{bmatrix}$ has L, and the fourth term $\begin{bmatrix} 0_{3\times1} \\ m\hat{p}_t\ddot{p}_t \end{bmatrix}$ has a product of $\hat{p}_t$ and $\ddot{p}_t$.

In an embodiment, when the body posture of the legged robot 110 changes slightly, $\dot{L}$ approximates to $0_{3\times1}$.

Alternatively, a value of the third term $\begin{bmatrix} 0_{3\times3} \\ \dot{L} \end{bmatrix}$ is determined according to a pre-specified body posture of the legged robot 110.

3: The center-of-mass position change amount in the fourth term $\widehat{p}_t\ddot{p}_t$ in the second relational expression is presented as a change amount in all directions, to obtain a third relational expression:

$$\widehat{p}_t\ddot{p}_t = \widehat{p}_t^{xy}\ddot{p}_t^{xy} + \widehat{p}_t^{xy}\ddot{p}_t^{z} + \widehat{p}_t^{z}\ddot{p}_t^{xy} + \widehat{p}_t^{z}\ddot{p}_t^{z} \qquad (6)$$

$p_t = p_t^{xy} + p_t^{z}$, and $p_t^{xy}$ includes components of $p_t$ on x and y axes. $\ddot{p}_t^{xy}$ refers to a second-order derivative of a component of the center-of-mass position change amount $p_t$ on a plane formed by the x and y axes with respect to the time interval, and also represents a component of the center-of-mass acceleration on the plane formed by the x and y axes. $\ddot{p}_t^{z}$ refers to a second-order derivative of a component of the center-of-mass position change amount $p_t$ on a plane formed by a z axis with respect to the time interval, and also represents a component of the center-of-mass acceleration on the plane formed by the z axis. $\widehat{p}_t^{xy}$ represents a diagonal matrix of the component of the center-of-mass position change amount $p_t$ on the x and y axes, and $\widehat{p}_t^{z}$ represents a diagonal matrix of the component of the center-of-mass position change amount $p_t$ on the z axis.

The z coordinate of $p_t^{xy}$ is 0, $p_t^{z}$ includes a component of $p_t$ on the z axis, and x and y coordinates corresponding to $p_t^{z}$ are 0. A generated torque around the z axis is $\widehat{p}_t^{xy}\ddot{p}_t^{xy}$, and a torque in a direction in the xy plane is $\widehat{p}_t^{xy}\ddot{p}_t^{z} + \widehat{p}_t^{z}\ddot{p}_t^{xy}$. Because $\ddot{p}_t^{z}$ and $\widehat{p}_t^{z}$ are collinear, it can be determined that $\widehat{p}_t^{z}\ddot{p}_t^{z} = 0$.

In addition, motion of the legged robot 110 in the direction of the z axis is relatively stable, so that $\ddot{p}_t^{z}$, $\widehat{p}_t^{z}$, and $\widehat{p}_t^{xy}\ddot{p}_t^{z} + \widehat{p}_t^{z}\ddot{p}_t^{xy}$ may be ignored. In addition, absolute values of $\widehat{p}_t^{xy}$, $\ddot{p}_t^{xy}$, and $\widehat{p}_t^{xy}\ddot{p}_t^{xy}$ are relatively small and may also be ignored. In an actual process of controlling the legged robot 110, a foot end force between the foot end and the contact surface may be adjusted to obtain the ignored terms in the foregoing formula (6), that is, the torque involved in the formula (6).

In an embodiment, the fifth term in the second relational expression may be ignored to obtain a third relational expression:

$$Gf \approx H_0 x_t - w \qquad (7)$$

where:

$$H_0 = m\begin{bmatrix} 0_{3\times3} & I_{3\times3} \\ \widehat{g} & \widehat{p^{init}} \end{bmatrix}, \quad x_t = \begin{bmatrix} p_t \\ \ddot{p}_t \end{bmatrix}, \text{ and } \quad w = \begin{bmatrix} mg \\ m\widehat{p^{init}}g - \dot{L} \end{bmatrix}$$

$H_0$ and w are known quantities, and $x_t$ includes the center-of-mass position change amount $p_t$ and the center-of-mass acceleration $\ddot{p}_t$, which are to-be-determined variables.

4: Present the center-of-mass position change amount as an n-order polynomial with time as an independent variable as follows:

$$P_t = \begin{bmatrix} T_P & 0_{1\times(n+1)} & 0_{1\times(n+1)} \\ 0_{1\times(n+1)} & T_P & 0_{1\times(n+1)} \\ 0_{1\times(n+1)} & 0_{1\times(n+1)} & T_P \end{bmatrix}\begin{bmatrix} c_{xk} \\ c_{yk} \\ c_{zk} \end{bmatrix} = Tc \qquad (8)$$

$T_P = [1\ t...t^n] \in R^{1\times(n+1)}$, $c_* = [c_{*,0}c_{*,1} ... c_{*,n}]^T \in R^{n+1}$ is a polynomial coefficient, * represents x, y, and z, and t represents the time interval, that is, a time interval between the moment and a moment corresponding to the spatial path start point, and c refers to the center-of-mass position change coefficient and includes all polynomial coefficients. In actual applications, after the center-of-mass position change coefficient c is obtained, the center-of-mass position at each of the plurality of moments can be calculated according to the foregoing formula (8).

In an embodiment, a value of n is any integer greater than or equal to 2.

5: Second-order derivation is performed on the foregoing formula (8) with respect to the time interval t, to obtain the center-of-mass acceleration, and a fourth relational expression is obtained according to the center-of-mass acceleration and the third relational expression.

The center-of-mass acceleration is specifically represented as follows:

$$\ddot{P}_t = \ddot{T}c \qquad (9)$$

The following fourth relational expression is obtained by substituting formula (8) and formula (9) into formula (7):

$$Gf \approx Hc - w \qquad (10)$$

$H = H_0[T^T\ddot{T}^T]^T$ is related to the time interval t, formula (10) represents a relationship between a polynomial coefficient c and a foot end contact force $f_i$. This relationship is actually obtained by transforming the relationship between the center-of-mass position and the foot end contact force.

In an embodiment, in actual applications, because other variables in formula (10) can be obtained by means of calculation, the center-of-mass position change coefficient c is linear to the foot end contact force f.

6: Because values of f, H, and w may be different at different moments, the foregoing formula (10) may be further represented as the following change relationship:

$$G_k f_k = H_k c - w_k \qquad (11)$$

k represents a k-th moment, $f_k$ represents a foot end contact force at the k-th moment, $H_k$ represents a value of H at the k-th moment, $w_k$ represents a value of w at the k-th moment, and Gk represents a value of the k-th moment G.

The foregoing is an example of a process of creating the change relationship. In actual applications, another dynamics equation may be used for describing the center-of-mass motion track of the legged robot 110, which is transformed to obtain the change relationship.

II. Obtain the constraint condition set

The constraint condition set includes one or more constraint conditions. Each constraint condition is used for constraining a range of values of the center-of-mass position, which may be presented by an inequality. The constraint condition set includes at least a spatial foothold constraint condition. For the meaning of the spatial foothold constraint condition, one may refer to the foregoing description. Details are not described herein again. The control device 120 may obtain a constraint condition set from a network resource or another device, or may create a constraint condition set. The following uses an example to describe a manner in which the control device 120 creates each constraint condition:

(1) Obtain a spatial foothold constraint condition

1: The control device 120 discretely calculates a plurality of positions that can be reached by the joint associated with the foot end, and fits a first space according to the plurality of positions.

The foot end is any foot end of the legged robot 110 that is to be dropped down, and the joint associated with the foot end is any joint associated with the foot end, for example, a joint directly connected to the foot end, or a joint indirectly connected to the foot end via another joint. The control device 120 may determine, according to a length of the joint and a bending range of the joint, a position that can be reached by the foot end in a local fixed coordinate system corresponding to the joint, where each position is represented as a point in the local fixed coordinate system, and the control device 120 performs fitting on these points to obtain the first space. The bending range of the joint is a range represented by a minimum angle and a maximum angle that the joint can bend, for example, the bending range is 0°-120°, and the bending range is generally a known range. For example, the joint length is 1 meter.

2: Determine a support plane from the first space.

S1.1. Determine a convex hull of the first space according to points at an uppermost layer in the first space.

The points at the uppermost layer in the first space are determined according to the first space obtained by fitting, and these points are connected to obtain the convex hull.

S1.2. Divide the foot end workspace into upper and lower parts by using a support plane at the bottom of the convex hull.

Selection of the support plane may be random. However, a working space of the lower part needs to be reserved as much as possible, and therefore, the resulting working space of the lower part is a convex set.

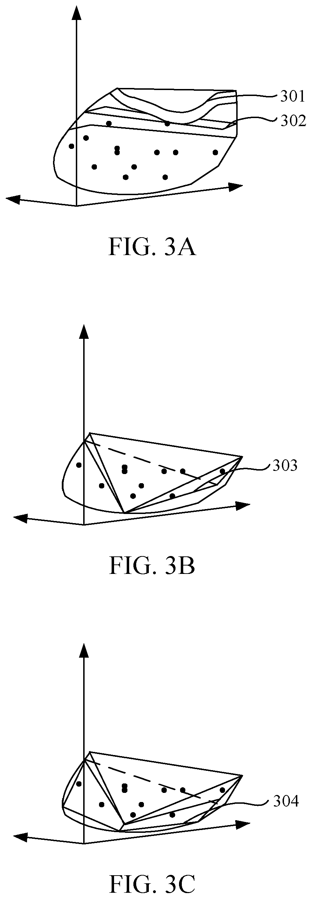

For example, referring to FIG. 3A, FIG. 3A is an example diagram of selecting a support plane. An overall irregular shape shown in FIG. 3A shows the first space obtained by performing fitting on the position. A convex hull 301 is determined from the first space, and a support plane 302 is determined according to the convex surface. All points below the support plane are points that can be reached by the foot end.

3: Determine n intersection points between the support plane and a first space boundary, determine a first point farthest to the support plane from the first space, and determine a first (n+1) polyhedron according to the first point and the n intersection points.

For example, a value of n is four. Four intersection points between the support plane and a first space boundary are determined, and a first point farthest to the support plane from the first space is determined. A first pentahedron is determined according to the first point and the four intersection points.

For example, referring to FIG. 3B, FIG. 3B is an example diagram of determining a first pentahedron, where a first pentahedron 303 is shown in FIG. 3B.

4: Determine a second point farthest from the first (n+1) polyhedron, form a second polyhedron with the first (n+1) polyhedron according to the second point, and repeat the step described in 4 until a convex polyhedron is obtained.

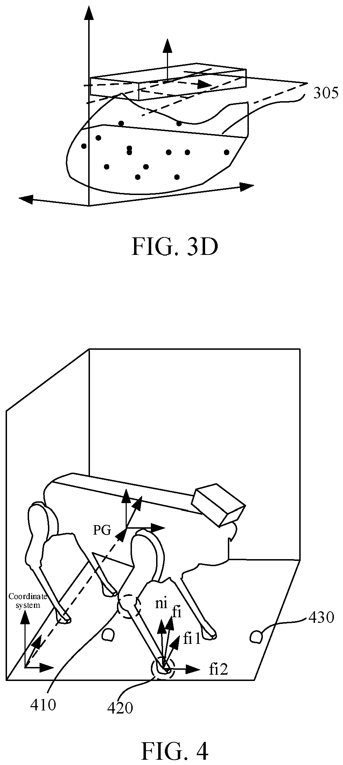

For example, referring to FIG. 3C, a polyhedron 304 is formed, and finally a convex polyhedron 305 shown in FIG. 3D is formed.

After the convex polyhedron is obtained, the control device 120 may obtain linear inequality representations of surfaces of the convex polyhedron:

$$s_{il}{}^T x_i \leq d_{il}$$

where $d_{il}$ is a distance between a plane in the convex polyhedron and an origin, $s_{il}$ represents a unit normal vector corresponding to the plane in the convex polyhedron, and 1 represents a quantity of planes. The inequalities of the planes are combined to obtain the linear inequality as follows:

$$S_i{}^T x_i \leq d_i \qquad\qquad (12)$$

$S_i = [s_{i1} s_{i2} ... S_{il}] \in R^{3 \times l}$, $d_i = [d_{i1} d_{i2} ... d_{il}] \in R^l$, $x_i$ represents a target foothold of the legged robot 110 in the local fixed coordinate system, $d_{il}$ is a distance between the plane in the convex polyhedron and the origin, $s_{il}$ represents the unit normal vector corresponding to the plane in the convex polyhedron, 1 represents the quantity of planes corresponding to the convex polyhedron, and c represents the center-of-mass position change coefficient.

In a specific implementation, the foregoing formula (12) may be determined based on the local fixed coordinate system of the joint. The local fixed coordinate system of the joint refers to a coordinate system established by using the local fixed coordinate system of the joint as a coordinate origin, that is, the coordinate origin of the local fixed coordinate system of the joint may be different from the coordinate origin of the world coordinate system. The joint may be any joint associated with the foot end of the foothold.

For example, referring to a schematic diagram of the position of the legged robot 110 shown in FIG. 4, the legged robot 110 includes a plurality of joints 410, four foot ends 420, and each foot end 420 is associated with a plurality of joints. The local fixed coordinate system of the joint is specifically the coordinate system shown in FIG. 4.

In the local fixed coordinate system, each variable may be decomposed into a plurality of variables along the local fixed coordinate system. For example, a contact force $f_i$ between the foot and the contact surface in FIG. 4 may be decomposed into $n_i$, $f_{i1}$, and $f_{i2}$ along the locally fixed coordinate system, and a center-of-mass position $p_G$ may also be decomposed along the locally fixed coordinate system.

5: Convert the target foothold ri into a representation of the locally fixed coordinate system to obtain a fifth relational expression.

Because the foregoing formula (12) is a representation of the local fixed coordinate system, the target foothold ri in the world coordinate system (which may also be referred to as a global coordinate system) needs to be converted into a representation of the local fixed coordinate system. A specific conversion process is represented as follows:

$$x_i = R_{il}^T(R_0^T(r_i - p_G) - p_{il})  \qquad (13)$$

$R_0 \in R^{3\times3}$ is a rotation matrix and represents the body posture of the legged robot 1 10 at the current moment, $p_{il} \in R^3$ is a first joint of the legged robot 110 relative to the center-of-mass of the legged robot 110 in a body coordinate system, and $R_{il} \in R^3$ is the body posture of the joint relative to the body coordinate system in the local fixed coordinate system. $p_{il}$ and $R_{il}$ are constants.

In an embodiment, when a change in the body posture of the legged robot 110 is relatively small, $R_0$ may be a constant. Alternatively the control device 120 may determine $R_0$ according to the body posture of the legged robot 110 corresponding to the current moment.

3: The center-of-mass position in the fifth relational expression is represented as an n-order polynomial related to time, and is substituted into the formula (12) to obtain a sixth relational expression.

Specifically, the foregoing formulas (4), (8), (12), and (13) are combined to obtain the following sixth relational expression:

$$A_i c \le b_i  \qquad (14)$$

where:

$$A_i = -S^T R_{il}^T R_0^T T$$

$$b_i = d + S^T R_{il}^T p_{il} - S^T R_{il}^T R_0^T (r_i - p^{init})$$

A; indicates a value of A corresponding to an i-th foot end, and $b_i$ indicates a value of b corresponding to the i-th foot end.

4: The target foothold and the moment are introduced into the sixth relational expression to obtain a spatial foothold constraint condition.

CD The target foothold position corresponding to the moment is introduced into the sixth relational expression to obtain a seventh relational expression, which is represented as:

The matrix A and the vector b are determined according to the moment, the quantity of dropped foot ends at the moment, and the target foothold.

② To ensure that the robot can reach the expected contact position at each moment in the generated motion process, h moments are set, and it is required that each moment can meet the foregoing formula (15). Further, the moment may be introduced into the seventh relational expression, and the following spatial foothold constraint condition is obtained:

$$Ac \le b  \qquad (15)$$

$$A_h c \le b_h, \ h=1, 2, 3 \dots H  \qquad (16)$$

The value of h may be the same as or different from the value of k in the foregoing. $A_h$ represents a value of A corresponding to the h-th moment, and $b_h$ represents a value of b corresponding to the h-th moment.

In addition to the spatial foothold constraint condition, the constraint condition set may further include a friction constraint condition used for constraining a friction between the contact surface and a foot end that is in contact with the contact surface at each sampling moment. The following provides an example for describing a manner in which the control device 120 creates the friction constraint condition.

(2) Obtain the friction constraint condition

1: Determine a friction constraint representation corresponding to the foot end at each moment, to obtain an eighth relational expression.

The contact force $f_i$ (i = 1, 2 ... Nc) between each foot end and the contact surface is constrained by the friction, which may be approximated as the following eleventh relational expression:

$$N_i^T f_i \leq 0 \qquad\qquad (17)$$

$N_i = - [\mu_i n_i - o_i \mu_i n_i + o_i \mu_i n_i - t_i \mu_i n_i + t_i] \in R^{3\times4}$, $n_i$ represents a normal vector of a target foothold of an i-th foot, $o_i$ represents a vector in a tangent direction of the target foothold of the i-th foot, t; represents a vector in another tangent direction of the target foothold of the i-th foot, and $\mu_i$ represents a friction coefficient.

Different materials of a contact surface contacted by a foot end may correspond to different values of a friction coefficient. At the same moment, contact surfaces contacted by different foot ends are different, and friction coefficients between different foot ends and a contact surface may also be different.

2: In the eighth relational expression, the time and the dropped foot end are introduced to obtain a friction constraint condition.

A ninth relational expression is obtained by combining friction constraints corresponding to all foot ends.

$$N^T f \leq 0 \qquad\qquad (18)$$

where,

$$N^T = \begin{bmatrix} N_1^T & 0 & ... & 0 \\ 0 & N_2^T & ... & 0 \\ \vdots & \vdots & \ddots & 0 \\ 0 & 0 & ... & N_{Nc}^T \end{bmatrix} \in R^{4Nc\times3Nc}.$$

At different moments, contact forces are different. Therefore, a moment may be introduced in formula (18) to obtain a friction constraint condition as follows:

$$N_k^T f_k \leq 0 \qquad\qquad (19)$$

$N_k^T$ represents a value of $N^T$ at a k-th moment, and $f_k$ represents a foot end contact force at the k-th moment.

Because of the small quantity of relational expressions of the change relationship and the constraint condition set, and the relatively large quantity of unknown variable need to be solved, there may be more than one center-of-mass position change coefficients that meet the change relationship and the constraint condition set. Therefore, in solving the center-of-mass position change coefficient, the target center-of-mass position change coefficient may be randomly determined from values that meet the change relationship and the constraint condition set. Alternatively, to obtain a better center-of-mass position change coefficient, in some embodiment of the present disclosure, an objective function may further be introduced, to obtain an optimal center-of-mass position change coefficient, so that the optimal center-of-mass position change coefficient is determined as the target center-of-mass position change coefficient.

Because the quadratic programming problem can certainly obtain a corresponding solution, in this embodiment of the present disclosure, the problem of determining the target center-of-mass position change coefficient may be converted into a quadratic programming problem. Therefore, the objective function in this embodiment of the present disclosure includes at least one quadratic term of one or more variables, where the one or more variables may be any variable related to a candidate result that meets the change relationship and the constraint condition set. The quadratic term may be constructed according to the quadratic of the variable.

In a possible embodiment, the object function includes at least one of the following:

A1: a quadratic term related to a change amount of the foot end contact force in the motion path;

A2: a quadratic term of a change amount of the center-of-mass position in the motion path;

A3: a quadratic term of a difference between an end center-of-mass position at the spatial path end point in the center-of-mass state data and a center-of-mass position at the spatial path end point in the candidate result;

A4: a quadratic term of a difference between an end center-of-mass speed at the spatial path end point in the center-of-mass state data and a center-of-mass speed at the spatial path end point in the candidate result; and

A5: a quadratic term of a difference between an end center-of-mass acceleration at the spatial path end point in the center-of-mass state data and a center-of-mass acceleration at the spatial path end point in the candidate result.

The following analyzes the functions of the foregoing quadratic items:

Function of A1: The change amount of the foot end contact force may be used for optimizing force distribution between the foot end and the contact surface, so that action forces between the foot end of the legged robot 110 and the contact surface are more evenly distributed during walking.

Function of A2: The center-of-mass position change amount reflects a length of the center-of-mass motion track, and helps reduce the fluctuation amplitude of the center-of-mass motion track.

Functions of A3-A5: They help reduce an error between a calculation result and an actual result.

In combination with the foregoing A1-A5, an expression of the objective function is as follows:

$$J_{grf} + J_{len} + J_{tgt} \qquad (20)$$

$J_{grf}$ is a weighted square sum of all foot end contact forces in the motion path, $J_{len}$ is a weighted square sum of differences between center-of-mass position changes at each two adjacent moments, $J_{tgt}$ is a weighted square sum of a difference between an end center-of-mass position at a spatial path end point in center-of-mass state data and a center-of-mass position at the spatial path end point in the candidate result, a difference between a center-of-mass speed corresponding to the end position in the candidate result and a center-of-mass speed corresponding to the state data at the end position, and a difference between a center-of-mass acceleration corresponding to the end position in the candidate result and a center-of-mass acceleration corresponding to the state data at the end position.

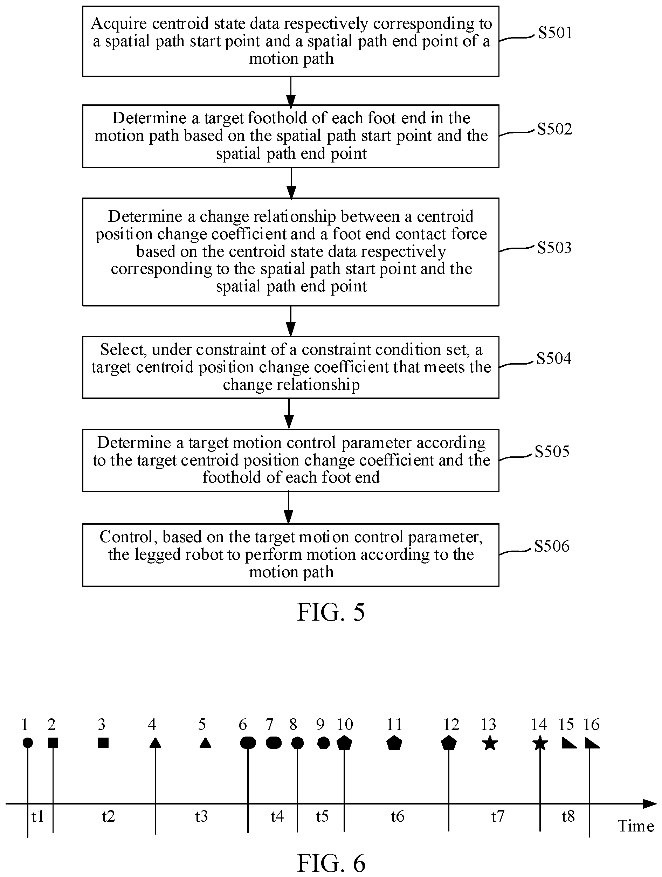

After the construction of the change relationship, the constraint condition set, and the objective function is described, the following describes, with reference to the process of the method for controlling motion of a legged robot shown in FIG. 5, a process of using the constructed change relationship and the constraint condition set to determine the center-of-mass position is described as an example of this embodiment of the present disclosure. The method includes the following steps S501 to S506.

S501. Acquire center-of-mass state data respectively corresponding to a spatial path start point and a spatial path end point of a motion path.

When the legged robot 110 is controlled to move, the control device 120 implements control of movement of the legged robot 110 by controlling lifting and dropping of the foot end of the legged robot 110, so that the legged robot 110 can complete motion on the entire motion path from the spatial path start point to the spatial path end point. The spatial path start point is a position of the legged robot 110 at the current moment. The spatial path end point is a position to be reached by the legged robot 110, and the spatial path end point may be set in advance, or may be determined by the control device 120 according to a task to be executed by the legged robot 110.

For the meaning of the center-of-mass state data and the manner of obtaining the center-of-mass state data, one may refer to the foregoing content. Details are not described herein again. The center-of-mass state data may include a center-of-mass position. Alternatively, according to one of the center-of-mass position, the center-of-mass speed, or the center-of-mass acceleration, the control device 120 may obtain the other two values. The center-of-mass position, the center-of-mass speed, or the center-of-mass acceleration may be represented by coordinates in a coordinate system, or may be represented by a vector, or the like.

In an embodiment, the motion path, the spatial path start point, and the spatial path end point are related to a sampling period of the legged robot 110. The motion path, the spatial path start point, and the spatial path end point may be flexibly set according to an actual requirement.

For example, the control device 120 may determine the position of the legged robot 110 at the current moment as the spatial path start point, and may determine the position in which the legged robot 110 is to be located at the 3nd second as the spatial path end point. In a next sampling period, the position of the legged robot 110 at the 3nd second may be selected as the spatial path start point of motion of the legged robot 110.

S502. Determine a target foothold for each foot end in the motion path based on the spatial path start point and the spatial path end point.

In a process of moving from the spatial path start point to the spatial path end point, one or more foot ends of the legged robot 110 may be dropped, and each foot end may be dropped for one or more times. The footholds are related to the specified spatial path start point and spatial path end point. The control device 120 may determine a target foothold in advance for each foot end to be dropped. The target foothold is a foothold of the legged robot 110 in the motion path. The target foothold may be represented by coordinates or vectors in the world coordinate system.

In specific implementation, the control device 120 may collect the environment image of the legged robot 110 by using the visual sensing unit 210, and construct a conversion relationship between each pixel in the environment image and the world coordinate system. The control device 120 determines the target foothold in a moving direction from the spatial path start point to the spatial path end point by using the environment image and the conversion relationship.

The control device 120 may specifically identify an obstacle from the spatial path start point to the spatial path end point according to the environment image, determine, according to the conversion relationship, a position of a non-obstacle in the moving direction corresponding to the spatial path start point to the spatial path end point, and use the determined position as the target foothold.

Alternatively, the control device 120 collects a three-dimensional point cloud map of the environment by using the visual sensing unit 210, and determines the target foothold from the three-dimensional point cloud map according to the three-dimensional point cloud map of the environment. Specifically, a position of a non-obstacle may be determined from the three-dimensional point cloud map as the target foothold. When the visual sensing unit 210 is an RGBD camera, a three-dimensional point cloud map may be collected, or for example, a plurality of current environment images including the legged robot 120 are collected, and three-dimensional reconstruction is performed on the plurality of environment images to obtain the three-dimensional point cloud map.

Alternatively, the control device 120 may randomly select a plurality of positions in the moving direction from the spatial path start point to the spatial path end point as the target footholds.

Because the legged robot 110 may drop down a foot more than once in a motion path process, the control device 110 may determine a target foothold corresponding to each foot-down of the robot in the motion path. Alternatively, in determining the target foothold, a large area in which the legged robot 110 probably drops down a foot may be determined according to a motion speed of the legged robot 110, and a target foothold for each foot-down is selected, in any one of the foregoing manners, from the large area corresponding to each foot-down.

For example, continuing to refer to FIG. 4, the current position of the legged robot 110 is shown in FIG. 4, and the control device 120 separately determines target footholds 430 of the foot ends, which are specifically circles on the ground shown in FIG. 4.

S503. Determine a change relationship between a center-of-mass position change coefficient and a foot end contact force based on the center-of-mass state data corresponding to the spatial path start point and the spatial path end point.

The change relationship may be, for example, the foregoing formula (11). For the meaning of the change relationship, one may refer to the foregoing content. Details are not described herein again.

For controlling motion of the legged robot 110, theoretically it is necessary to obtain the center-of-mass position of the legged robot 110 at any moment when moving from the spatial path start point to the spatial path end point, which however requires a large calculation amount. Therefore, in this embodiment of the present disclosure, the control device 120 may obtain a center-of-mass position at each of a plurality of moments in the motion path, and determine a center-of-mass motion track based on the center-of-mass positions at the plurality of moments.

Referring to the change relationship shown in the foregoing formula (1), the change relationship includes not only the center-of-mass change coefficient setting and the foot end contact force, but also parameters such as $H_k$ and $w_k$. Therefore, these parameters may be obtained by using known data such as the center-of-mass state data, so as to obtain a change relationship that includes only two unknown variables: the center-of-mass position change coefficient and the foot end contact force.

The following describes a specific example of a manner in which the control device 120 obtains the change relationship.

S1.1. Obtain a plurality of sampling moments.

The control device 120 may obtain, according to the length of the motion path and the motion speed of the legged robot 110, a moving time period required by the legged robot to complete the motion path, or the control device 120 directly obtains preconfigured moving time period required by the motion path.

After the moving time period is obtained, the control device 120 may randomly sample the moving time period to obtain a plurality of sampling moments. Alternatively, the control device 120 may separately perform sampling on the time period of each motion stage according to the stepping sequence of the legged robot 110, to obtain a plurality of sampling moments. Because each motion stage has corresponding sampling moments, accuracy of a center-of-mass motion track determined later is improved.

In an embodiment, the sampling moments may have equal intervals or unequal intervals. The unequal interval means that time intervals between two adjacent sampling moments are not completely the same, or there is a time interval between two adjacent sampling moments is different from others.

In an embodiment, more obtained quantity of sampling times and more proper sampling time distribution will lead to more reliable determined center-of-mass motion track. However, more sampling moments require more relational expressions required for subsequently resolving the center-of-mass position change coefficient, and a longer time required for solving the center-of-mass position change coefficient. Therefore, it is important to properly plan a quantity of sampling points. In this embodiment of the present disclosure, the sampling moment includes at least a start moment and an end moment of each motion stage, and at least one intermediate moment of each motion stage. The intermediate moment refers to any moment between the start moment and the end moment of the motion stage.

For example, a quadruped walking gait of the legged robot 110 is set as a sampling period, and the control device 120 sequentially divides a movement process of the legged robot 110 in the sampling period into eight motion stages. The eight motion stages are specifically: center-of-mass moving with four-leg support (4S for short), stepping hind right foot (HR for short), stepping fore right foot (FR for short), center-of-mass moving with four-leg support (4S for short), center-of-mass moving with four-leg support (4S for short), stepping hind left foot (HL for short), stepping fore left foot (FL for short), and center-of-mass moving with four-leg support (4S for short).

Referring to a schematic diagram of sampling moment distribution shown in FIG. 6, the time periods of the eight motion stages may be respectively represented as t1, t2, t3, t4, t5, t6, t7, and t8 shown in FIG. 6. For ease of description, the eight motion stages are respectively referred to as a first motion stage, a second motion stage, and so on. The control device 120 samples each motion stage to obtain sampling moments 1 and 2 in the first motion stage shown in FIG. 6, sampling moments 2, 3, and 4 in the second motion stage, sampling moments 4, 5, and 6 in the third motion stage, sampling moments 6, 7, and 8 in the fourth motion stage, and so on, so as to successively obtain a plurality of sampling moments corresponding to each motion stage. In FIG. 6, sampling moments of the same shape are sampling moments of the same motion phase, and sampling moments of different shapes belong to different motion phases.

Because motion stages in a sampling period are consecutive, an end moment of a motion stage is a sampling moment in the motion stage, and is also a sampling moment in a next motion stage. For example, the sampling moment 6 in FIG. 6 may be considered as a sampling moment in both the third motion stage and the fourth motion stage.

S1.2. Determine a plurality of sampling moments from the moving time period, and determine a time interval between each sampling moment and a moment corresponding to the spatial path start point as a time interval corresponding to the sampling moment.

The control device 120 knows a start moment corresponding to the spatial path start point and each sampling moment. Therefore, a time interval between each sampling moment and the start moment can be determined. A plurality of time intervals may be obtained for a plurality of sampling moments.

S1.3. Obtain a change relationship between the center-of-mass position change coefficient and a foot end contact force at each sampling moment according to a time interval corresponding to each sampling moment, the start center-of-mass position, and a relational expression between a center-of-mass position and the foot end contact force at each sampling moment.

A relational expression between the center-of-mass position and the foot end contact force at each sampling moment is a pre-stored relational expression, and the relational expression is specifically described in the foregoing formula (2).

The control device 120 may determine values of $H_k$ and $w_k$ in the foregoing formula (11) according to a time interval and a start center-of-mass position that are corresponding to each sampling moment, so that a change relationship having only two unknown quantities, i.e., the center-of-mass position change coefficient and a foot end contact force at each sampling moment, can be obtained.

As described in the foregoing, $H = H_0[T^\mathsf{T}\ddot{T}^\mathsf{T}]T$, $H_0 = m\begin{bmatrix} 0_{3\times3} & I_{3\times3} \\ \hat{g} & \widehat{p^{init}} \end{bmatrix}$, a time interval corresponding to each sampling moment is substituted into the two formulas, to calculate a value of $H_k$ corresponding to each moment. $w_k$ may be a fixed value, or a value of a gravity of the legged robot 110, a start center-of-mass position, and a center-of-mass angular momentum L at a k-th moment are substituted into the foregoing formula $w = \begin{bmatrix} mg \\ m\hat{p}^{init}g - \dot{L} \end{bmatrix}$, so as to calculate a value of $w_k$ corresponding to each sampling moment. The center-of-mass angular momentum may be calculated by using a body posture of the legged robot 110 at each sampling moment. The k-th moment is a selected sampling moment, and therefore the k-th moment may be referred to as the k-th sampling moment.

Further, because the stepping sequence of the legged robot 110 is obtained by the control device 120, the stepping sequence is a determined sequence, so that the control device 120 can determine a foot end to be dropped each time, and can also correspondingly obtain a position $r_{ij}$ of an i-th contact point at which the legged robot 110 contacts the contact surface in the world coordinate system at a sampling time.

For example, referring to the example shown in FIG. 6:

(1) When the legged robot is in a 4S phase, $G_k$ is a $3\times4$ matrix, which may be obtained according to formula (3) and the target foothold of the legged robot at the corresponding moment. $f_k$ is a 12-dimensional vector, $N_k$ is a $16\times12$ matrix, and $N_k$ is calculated according to a normal direction, a tangent vector, and a friction coefficient of the target foothold of the legged robot at the corresponding moment.

The quantity, positions, and other related information of the target footholds may be different in different stages of the robot. $G_k$ and $N_k$ will change with time, and $H_k$ and $w_k$ will also change with time, so that there is a change relationship between a center-of-mass position change coefficient at each moment and a foot end contact force corresponding to each sampling moment.

S504. Select, under constraint of a constraint condition set, a target center-of-mass position change coefficient that meets the change relationship.

The constraint condition set includes at least a spatial foothold constraint condition. For the meaning and specific expression of the spatial foothold constraint condition, one may refer to the foregoing description. Details are not described herein again. For the spatial foothold constraint condition, one may refer to the foregoing formula (16).

Because a unique solution cannot be obtained according to the change relationship at each sampling moment and the constraint condition set, the control device 120 may determine a plurality of groups of candidate results that meet the change relationship and the constraint condition set at each sampling moment. Each group of candidate results includes a center-of-mass position change coefficient. The candidate result may further include a contact force corresponding to each sampling moment. The control device 120 may select a target center-of-mass position change coefficient from the center-of-mass position change coefficients included in the plurality of groups of candidate results.

Alternatively, the control device 120 may determine the target center-of-mass position change coefficient from the plurality of groups of candidate results according to an objective function. The following provides an example of a process in which the control device 120 determines the plurality of groups of candidate results.

Step 1: Determine a target constraint relationship of a center-of-mass position change coefficient at each sampling moment as a target constraint condition corresponding to each sampling moment according to a foot end in contact with a contact surface at each sampling moment, a body posture of the legged robot 110 at each sampling moment, a target foothold for each foot end, and the spatial foothold constraint condition.

For an expression of the spatial foothold constraint condition, reference may be made to the foregoing formula (16). In addition to the center-of-mass position change coefficient c, formula (16) further includes some variables that need to be solved by the control device 120, which specifically include $A_h$ and $b_h$ in formula (16). The following provides an example for describing a manner in which the control device 120 determines these variations.

When a change in the body posture of the legged robot 110 is relatively small, the control device 120 may determine values of the variables $A_h$ and $b_h$ in the spatial foothold constraint condition according to the quantity of foot ends that are in contact with the contact surface at each sampling moment, rotation ranges of joints corresponding to the foot ends of the legged robot 110, and lengths of the joints, so as to obtain a target constraint relationship of the center-of-mass position change coefficient c. Because values of $A_h$ and $b_h$ at each sampling moment may be different, a target constraint relationship is obtained for each sampling moment.

Alternatively, when the change in the body posture of the legged robot 110 is relatively large and cannot be ignored, the control device 120 may determine the values of the variables $A_h$ and $b_h$ according to the quantity of foot ends that are in contact with the contact surface at each sampling moment, the body posture of the legged robot 110, the rotation ranges of the joints corresponding to the foot ends of the legged robot 110, and the lengths of the joints, so as to obtain the target constraint relationship of the center-of-mass position change coefficient c.

In an embodiment, a rotation range and a length of a joint corresponding to a foot end of the legged robot 110 may be obtained by the control device 120 by using a default joint length and bending range of the joint, or using a length and a bending range of the joint of the legged robot 110 that are pre-obtained. Rotation ranges and lengths of joints corresponding to any two foot ends of the legged robot 110 may be the same or may be different.

In a possible embodiment, when the constraint condition set further includes a friction constraint condition, (for the meaning of the friction constraint condition, one may refer to the foregoing description, and details are not described herein again), the control device 120 may obtain a constraint relationship between a target foothold and a foot end contact force that are corresponding to each sampling moment, according to the sampling moments and a friction constraint condition.

2: Combine the change relationship at each sampling moment and the target constraint relationship at each sampling moment to obtain a plurality of groups of candidate results.

The control device 120 may determine, according to the change relationship at the sampling moment and the target constraint relationship at each sampling moment, the groups of candidate results that meet these relationships. For the meaning of the candidate result, one may refer to the foregoing description. Details are not described herein again.

In an embodiment, if the constraint condition set further includes friction constraint conditions, the determined groups of candidate results also needs to meet these constraint conditions.

For example, the candidate result needs to specifically meet the following relational expressions:

$$\begin{cases} G_k f_k = H_k c - w_k \\ N_k^T f_k \leq 0 \\ k = 1,2 \dots K \\ A_h c \leq b_h \\ h = 1,2,3 \dots H \\ T(0)c = 0, \dot{T}(0)c = v_0, \ddot{T}(0)c = a \end{cases} \tag{21}$$

where k represents any sampling moment, h represents any sampling moment, $v_0$ represents the center-of-mass speed, and a represents the center-of-mass acceleration.

In a possible embodiment, the control device 120 may randomly determine a candidate result from the plurality of groups of candidate results as a final target result.

3: Minimize the objective function according to a plurality of candidate results to obtain a target result.

In this embodiment of the present disclosure, the control device 120 obtains the final target result with reference to the objective function.

Specifically, after obtaining the candidate result, the control device 120 may determine a value of the objective function corresponding to each group of candidate results, and determine a candidate result with the minimum value of the corresponding objective function as the target result. The following uses the foregoing formula (20) as an example to describe a process in which the control device 120 obtains a value of the objective function corresponding to a group of candidate results.

(1) The control device 120 obtains, according to the center-of-mass positions of each sampling moment in a plurality of sampling moments in the group of candidate results, a foot end contact force corresponding to each sampling moment, and determines a weighted square sum of the foot end contact forces, so as to obtain a value of $J_{grf}$ in the objective function shown in formula (20). Weighting weights of the contact forces may be the same, or may be different.

(2) The control device 120 determines a weighted square of differences between center-of-mass positions of every two adjacent sampling moments in the plurality of sampling moments, so as to obtain the value of $J_{len}$ in the objective function shown in formula (20). Weighting weights of the center-of-mass positions may be the same, or may be different.

(3) The control device 120 determines a weighted sum of the following three values: a difference between the center-of-mass position corresponding to the spatial path end point in the candidate result and the center-of-mass position at the spatial path end point in the center-of-mass state data, a difference between the center-of-mass speed corresponding to the spatial path end point in the candidate result and the center-of-mass speed at the spatial path end point in the center-of-mass state data, and a difference between the center-of-mass acceleration corresponding to the spatial path end point in the candidate result and the center-of-mass acceleration at the spatial path end point in the center-of-mass state data, so as to obtain the value of $J_{tgt}$ in the objective function shown in formula (20).

After the value of $J_{grf}$, the value of $J_{len}$, and the value of $J_{tgt}$ in the objective function shown in formula (20) are obtained, the control device 120 determines a sum of the value of $J_{grf}$, the value of $J_{len}$, and the value of $J_{tgt}$, so that the value of the objective function corresponding to the candidate result is determined.

S505. Determine a target motion control parameter according to the target center-of-mass position change coefficient and the target foothold for each foot end.

After obtaining the target result, the control device 120 also obtains the center-of-mass position change coefficient. The control device 120 may obtain the center-of-mass positions at the plurality of sampling moments according to the center-of-mass position change coefficient and corresponding time intervals. For specific calculation formulas involved, one may refer to the foregoing formula (4) and formula (8).

After obtaining center-of-mass positions at a plurality of sampling moments, the control device 120 may fit a center-of-mass motion track according to the center-of-mass positions at the plurality of sampling moments, or may perform interpolation on the center-of-mass positions at the plurality of sampling moments, so as to obtain the center-of-mass motion track of the legged robot 110. There are various fitting manners, which are not limited herein. After the center-of-mass motion track is obtained, the center-of-mass position of the legged robot 110 at each moment is obtained.

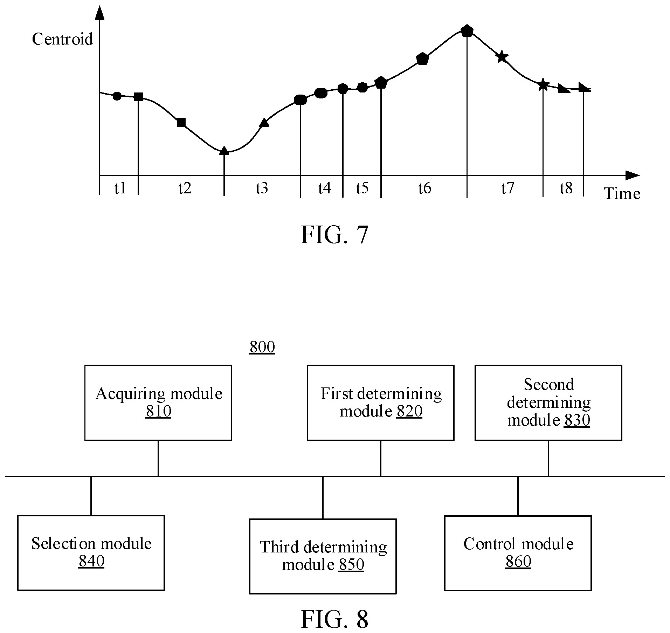

For example, referring to FIG. 7, FIG. 7 shows a center-of-mass motion track obtained by performing fitting on target results determined in FIG. 6. It may be learned from FIG. 7 that the center-of-mass position continuously changes with different motion stages.

Further, the control device 120 may calculate, by using inverse kinematics, a whole-body motion track of the legged robot 110 according to the center-of-mass position and the target footholds of the legged robot 110, where the whole-body motion track includes joint angles of joints of the legged robot 110 at each moment. The joint angles are used for representing angles of the rotated joints of the legged robot. Then, joint torques of a plurality of joints of the robot in the motion path are determined by using an inverse dynamics and optimization control method. Both the joint torque and the joint angle may be considered as target motion control parameters.

S506. Control, based on the target motion control parameters, motion of the legged robot along the motion path.

Specifically, the control device 120 may control each joint of each foot end of the legged robot 110, so as to raise or fall each foot of the legged robot, thereby driving the legged robot 110 to move along the motion path. The control device 120 specifically controls joint torques of a plurality of joints of the legged robot 110 to enable at least one foot of the legged robot to support the moving legged robot, so as to control a true center-of-mass position of the legged robot to be at the determined center-of-mass position.

In this embodiment of the present disclosure, in determining the center-of-mass position of the legged robot 110, the spatial foothold constraint condition is introduced, so that the determined center-of-mass position can meet the spatial foothold constraint condition, to improve a matching degree between the determined center-of-mass position and the actual moving process of the legged robot, that is, adaptability of the center-of-mass position to an actual moving environment is improved, and the accuracy of the joint torque determined based on the center-of-mass position and the target foothold is further improved.

Based on the same inventive concept, an embodiment of the present disclosure provides an apparatus for controlling motion of a legged robot. The apparatus is equivalent to the foregoing described control device 120. Referring to FIG. 8, the apparatus 800 for controlling motion of a legged robot includes:

> an acquiring module 810, configured to acquire center-of-mass state data corresponding to a spatial path start point of a motion path and center-of-mass state data corresponding to a spatial path end point of the motion path;

> a first determining module 820, configured to determine a target foothold for each foot end in the motion path based on the spatial path start point and the spatial path end point;

> a second determining module 830, configured to determine a change relationship between a center-of-mass position change coefficient and a foot end contact force based on the center-of-mass state data respectively corresponding to the spatial path start point and the spatial path end point;

> a selection module 840, configured to select, under constraint of a constraint condition set, a target center-of-mass position change coefficient that meets the change relationship; the constraint condition set including at least a spatial foothold constraint condition, and the spatial foothold constraint condition being used for constraining a value of the center-of-mass position change coefficient to control the legged robot to reach the target foothold;

> a fourth determining module 850, configured to determine a target motion control parameter according to the target center-of-mass position change coefficient and the target foothold for each foot end; and

> a control module 860, configured to control, based on the target motion control parameter, motion of the legged robot along the motion path.

In a possible embodiment, the center-of-mass state data corresponding to the spatial path start point includes a start center-of-mass position at the spatial path start point, and the second determining module 830 is specifically configured to:

> obtain a moving time period required by the legged robot to complete the motion path;

> determine a plurality of sampling moments from the moving time period, and determining, for each of the sampling moments, a time interval between the sampling moment and a moment corresponding to the spatial path start point, to obtain time intervals respectively corresponding to the sampling moments; and

obtain a change relationship between the center-of-mass position change coefficient and a foot end contact force at each of the sampling moments according to the time intervals respectively corresponding to the sampling moments, the start center-of-mass position, and a relational expression between a center-of-mass position and the foot end contact force at each of the sampling moments.

In a possible embodiment, the second determining module 830 is specifically configured to:

determine a center-of-mass angular momentum at each of the sampling moments according to a body posture of the legged robot at each of the sampling moment; and

obtain the change relationship between the center-of-mass position change coefficient and the foot end contact force at each of the sampling moments according to the center-of-mass angular momentum at each of the sampling moments, the time intervals respectively corresponding to the sampling moments, the start center-of-mass position, and the relational expression between the center-of-mass position and the foot end contact force at each of the sampling moments.

In a possible embodiment, the selection module 840 is specifically configured to:

determine a target constraint relationship of a center-of-mass position change coefficient at each of the sampling moments as a target constraint relationship corresponding to each of the sampling moments according to a foot end in contact with a contact surface at each of the sampling moments, a body posture of the legged robot at each of the sampling moments, the target foothold for each foot end, and the spatial foothold constraint condition; and

select the target center-of-mass position change coefficient that meets the target constraint relationship corresponding to each of the sampling moments and the change relationship between the center-of-mass position change coefficient and the foot end contact force at each of the sampling moments.

In a possible embodiment, the second determining module 830 is further configured to:

determine, for each of the sampling moments, a plurality of positions reachable by a foot end in contact with the contact surface at the sampling moment according to a rotation range and a length of a joint associated with the foot end; and

perform fitting on the plurality of positions to obtain the spatial foothold constraint condition of the legged robot.

In a possible embodiment, the selection module 840 is specifically configured to:

obtain, under constraint of the constraint condition set, a plurality of groups of candidate results that meet the change relationship; each of the groups of candidate results including a center-of-mass position change coefficient; and

minimize an objective function according to the plurality of groups of candidate results, to determine a target result from the plurality of groups of candidate results; the objective function being a quadratic term constructed according to a parameter related to the candidate results.

In a possible embodiment, the objective function includes at least one of the following:

a quadratic term related to a change amount of a foot end contact force in the motion path;

a quadratic term of a change amount of a center-of-mass position in the motion path;

a quadratic term of a difference between an end center-of-mass position at the spatial path end point in the center-of-mass state data corresponding to the spatial path end point and a center-of-mass position at the spatial path end point in the candidate result;

a quadratic term of a difference between an end center-of-mass speed at the spatial path end point in the center-of-mass state data corresponding to the spatial path end point and a center-of-mass speed at the spatial path end point in the candidate result; and

a quadratic term of a difference between an end center-of-mass acceleration at the spatial path end point in the center-of-mass state data corresponding to the spatial path end point and a center-of-mass acceleration at the spatial path end point in the candidate result.

In a possible embodiment, the constraint condition set further includes:
a friction constraint condition used for constraining a friction between a foot end at a foothold and the contact surface, the friction between the foot end at the foothold and the contact surface being determined according to the foot end contact force and a friction coefficient.

In a possible embodiment, the first determining module 820 is specifically configured to:

collect a three-dimensional point cloud map of an environment in which the legged robot is currently located; and

determine, for each contact with the contact surface in the motion path, a target foothold corresponding to a foot end of the legged robot in the contact with the contact surface from the three-dimensional point cloud map.

In a possible embodiment, the third determining module 850 is specifically configured to:

determine a center-of-mass position of the legged robot at any moment according to the target center-of-mass position change coefficient; and

determine a joint torque of the legged robot at any moment according to the center-of-mass position of the legged robot at any moment and the target foothold for each foot end.

The apparatus 800 for controlling motion of a legged robot shown in FIG. 8 may be configured to implement any method for controlling motion of a legged robot described in the foregoing. Details are not described herein again.

Based on the same inventive concept, an embodiment of the present disclosure further provides a device for controlling motion of a legged robot. The device for controlling motion of a legged robot can be configured to implement a function of the foregoing legged robot 110, or can be configured to implement a function of the foregoing control device 120.

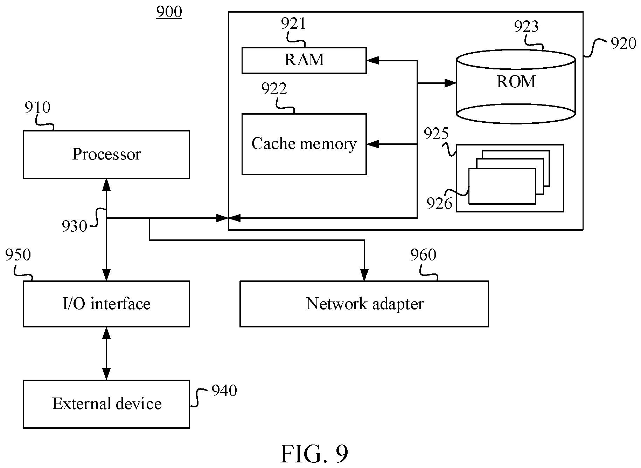

Referring to FIG. 9, a device 900 for controlling motion of a legged robot is represented as a general computer device. Components of the computer device 900 may include but are not limited to: at least one processor 910, at least one memory 920, and a bus 930 connected to different system components (including the processor 910 and the memory 920).

The bus 930 represents one or more of several types of bus structures, including a memory bus or a memory controller, a peripheral bus, a processor, or a local bus using any bus structure among various bus structures.

The memory 920 may include a readable medium in a form a volatile memory, such as a random access memory (RAM) 921 and/or a cache memory 922, and may further include a read-only memory (ROM) 923. The memory 920 may further include a program/utility tool 926 having a group of (at least one) program modules 925. Such a program module 925 includes, but is not limited to, an operating system, one or more application programs, other program modules, and program data. Each or a combination of these examples may include implementation of a network environment. The processor 910 is configured to execute program instructions stored in the memory 920 and the like to implement the foregoing method for controlling motion of a legged robot.

The computer device 900 may communicate with one or more external devices 940 (such as a keyboard and a pointing device), may further communicate with a plurality of devices that enable a terminal to interact with the computer device 900, and/or communicate with any device (such as router or a modem) that enables the computer device 900 to communicate with one or more other devices. This communication may proceed through an input/output (I/O) interface 950. In addition, the computer device 900 may further communicate with one or more networks such as a local area network (LAN), a wide area network (WAN), and/or a public network (such as the Internet) through a network adapter 960. As shown in the figure, the network adapter 960 communicates with other modules of the computer device 900 by using the bus 930. It is to be understood that although not shown in the figure, other hardware and/or software modules may be used in combination with the computer device 900, including, but not limited to microcode, a device driver, a redundancy processing unit, an external disk drive array, a RAID system, a tape drive, a data backup storage system, or the like.

Based on the same inventive concept, an embodiment of the present disclosure provides a storage medium, where the storage medium stores computer instructions, and when the computer instructions are run on a computer, the computer performs the foregoing method for controlling motion of a legged robot.

Based on the same inventive concept, an embodiment of the present disclosure provides a computer program product, where the computer program product includes computer instructions, and the computer instructions are stored in a computer readable storage medium. A processor of a computer device reads the computer instructions from the computer readable storage medium, and the processor executes the computer instructions, so that the computer device performs the foregoing method for controlling motion of a legged robot.

A person skilled in the art is to understand that the embodiments of the present disclosure may be provided as a method, a system, or a computer program product. Therefore, hardware-only embodiments, software-only embodiments, or embodiments with a combination of software and hardware may be used. In addition, the present disclosure provides a computer program product that is implemented as one or more computer-usable storage media (including but not limited to a disk memory, a CD-ROM, an optical memory, and the like) that include computer-usable program code.

Certainly, a person skilled in the art can make various modifications and variations without departing from the spirit and scope of the present disclosure. In this case, if the modifications and variations fall within the scope of the claims of the present disclosure and equivalent technologies thereof, these modifications and variations are also covered in the present disclosure.

## Claims

1. A method for controlling motion of a legged robot, performed by a control device and comprising:

   acquiring center-of-mass state data corresponding to a spatial path start point of a motion path and center-of-mass state data corresponding to a spatial path end point of the motion path;

   determining a target foothold for each foot end in the motion path based on the spatial path start point and the spatial path end point;

   determining a change relationship between a center-of-mass position change coefficient and a foot end contact force based on the center-of-mass state data respectively corresponding to the spatial path start point and the spatial path end point;

   selecting, under constraint of a constraint condition set, a target center-of-mass position change coefficient that meets the change relationship, the constraint condition set comprising at least a spatial foothold constraint condition, and the spatial foothold constraint condition being used for constraining a value of the center-of-mass position change coefficient to control the legged robot to reach the target foothold;

   determining a target motion control parameter according to the target center-of-mass position change coefficient and the target foothold for each foot end; and

   controlling, based on the target motion control parameter, motion of the legged robot along the motion path.

2. The method according to claim 1, wherein the center-of-mass state data corresponding to the spatial path start point comprises a start center-of-mass position at the spatial path start point, and the determining a change relationship between a center-of-mass position change coefficient and a foot end contact force based on the center-of-mass state data respectively corresponding to the spatial path start point and the spatial path end point comprises:

   obtaining a moving time period required by the legged robot to complete the motion path;

   determining a plurality of sampling moments from the moving time period, and determining, for each of the sampling moments, a time interval between the sampling moment and a moment corresponding to the spatial path start point, to obtain time intervals respectively corresponding to the sampling moments; and

   obtaining a change relationship between the center-of-mass position change coefficient and a foot end contact force at each of the sampling moments according to the time intervals respectively corresponding to the sampling moments, the start center-of-mass position, and a relational expression between a center-of-mass position and the foot end contact force at each of the sampling moments.

3. The method according to claim 2, wherein the obtaining a change relationship between the center-of-mass position change coefficient and a foot end contact force at each of the sampling moments according to the time intervals respectively corresponding to the sampling moments, the start center-of-mass position, and a relational expression between a center-of-mass position and the foot end contact force at each of the sampling moments comprises:

   determining a center-of-mass angular momentum at each of the sampling moments according to a body posture of the legged robot at each of the sampling moments; and

   obtaining the change relationship between the center-of-mass position change coefficient and the foot end contact force at each of the sampling moments according to the center-of-mass angular momentum at each of the sampling moments, the time intervals respectively corresponding to the sampling moments, the start center-of-mass position, and the relational expression between the center-of-mass position and the foot end contact force at each of the sampling moments.

4. The method according to claim 2, wherein the selecting, under constraint of a constraint condition set, a target center-of-mass position change coefficient that meets the change relationship comprises:

determining a target constraint relationship of a center-of-mass position change coefficient at each of the sampling moments as a target constraint relationship corresponding to each of the sampling moments according to a foot end in contact with a contact surface at each of the sampling moments, a body posture of the legged robot at each of the sampling moments, the target foothold for each foot end, and the spatial foothold constraint condition; and
selecting the target center-of-mass position change coefficient that meets the target constraint relationship corresponding to each of the sampling moments and the change relationship between the center-of-mass position change coefficient and the foot end contact force at each of the sampling moments.

5. The method according to claim 4, wherein the method further comprises:

determining, for each of the sampling moments, a plurality of positions reachable by a foot end in contact with the contact surface at the sampling moment according to a rotation range and a length of a joint associated with the foot end; and
performing fitting on the plurality of positions to obtain the spatial foothold constraint condition of the legged robot.

6. The method according to any one of claims 1 to 5, wherein the selecting, under constraint of a constraint condition set, a target center-of-mass position change coefficient that meets the change relationship comprises:

obtaining, under constraint of the constraint condition set, a plurality of groups of candidate results that meet the change relationship, each of the groups of candidate results comprising a center-of-mass position change coefficient; and
minimizing an objective function according to the plurality of groups of candidate results, to determine a target result from the plurality of groups of candidate results, the objective function being a quadratic term constructed according to a parameter related to the candidate results.

7. The method according to claim 6, wherein the objective function comprises at least one of the following:

a quadratic term related to a change amount of a foot end contact force in the motion path;
a quadratic term of a change amount of a center-of-mass position in the motion path;
a quadratic term of a difference between an end center-of-mass position at the spatial path end point in the center-of-mass state data corresponding to the spatial path end point and a center-of-mass position at the spatial path end point in the candidate result;
a quadratic term of a difference between an end center-of-mass speed at the spatial path end point in the center-of-mass state data corresponding to the spatial path end point and a center-of-mass speed at the spatial path end point in the candidate result; and
a quadratic term of a difference between an end center-of-mass acceleration at the spatial path end point in the center-of-mass state data corresponding to the spatial path end point and a center-of-mass acceleration at the spatial path end point in the candidate result.

8. The method according to any one of claims 1 to 5, wherein the constraint condition set further comprises:
a friction constraint condition used for constraining a friction between a foot end at a foothold and the contact surface, the friction between the foot end at the foothold and the contact surface being determined according to the foot end contact force and a friction coefficient.

9. The method according to any one of claims 1 to 5, wherein the determining a target foothold for each foot end in the motion path based on the spatial path start point and the spatial path end point comprises:

collecting a three-dimensional point cloud map of an environment in which the legged robot is currently located; and

determining, for each contact with the contact surface in the motion path, a target foothold corresponding to a foot end of the legged robot in the contact with the contact surface from the three-dimensional point cloud map.

10. The method according to any one of claims 1 to 5, wherein the determining a target motion control parameter according to the target center-of-mass position change coefficient and the target foothold for each foot end comprises:

determining a center-of-mass position of the legged robot at any moment according to the target center-of-mass position change coefficient; and
determining a joint torque of the legged robot at any moment according to the center-of-mass position of the legged robot at any moment and the target foothold for each foot end.

11. An apparatus for controlling motion of a legged robot, comprising:

an acquiring module, configured to acquire center-of-mass state data corresponding to a spatial path start point of a motion path and center-of-mass state data corresponding to a spatial path end point of the motion path;
a first determining module, configured to determine a target foothold for each foot end in the motion path based on the spatial path start point and the spatial path end point;
a second determining module, configured to determine a change relationship between a center-of-mass position change coefficient and a foot end contact force based on the center-of-mass state data respectively corresponding to the spatial path start point and the spatial path end point;
a selection module, configured to select, under constraint of a constraint condition set, a target center-of-mass position change coefficient that meets the change relationship, the constraint condition set comprising at least a spatial foothold constraint condition, and the spatial foothold constraint condition being used for constraining a value of the center-of-mass position change coefficient to control the legged robot to reach the target foothold;
a fourth determining module, configured to determine a target motion control parameter according to the target center-of-mass position change coefficient and the target foothold for each foot end; and
a control module, configured to control, based on the target motion control parameter, motion of the legged robot along the motion path.

12. A device for controlling motion of a legged robot, comprising:

a memory; and
at least one processor connected to a collecting component and the memory;
the memory storing instructions executable by the at least one processor, and the at least one processor being configured to execute the instructions stored in the memory to perform the method according to any one of claims 1 to 10.

13. A storage medium, storing computer instructions that when run on a computer, cause the computer to perform the method according to any one of claims 1 to 10.

14. A computer program product, comprising instructions that when run on a computer, cause the computer to perform the method according to any one of claims 1 to 10.

FIG. 1

FIG. 2

FIG. 3A

FIG. 3B

FIG. 3C

FIG. 3D

FIG. 4

Acquire centroid state data respectively corresponding to a spatial path start point and a spatial path end point of a motion path — S501

Determine a target foothold of each foot end in the motion path based on the spatial path start point and the spatial path end point — S502

Determine a change relationship between a centroid position change coefficient and a foot end contact force based on the centroid state data respectively corresponding to the spatial path start point and the spatial path end point — S503

Select, under constraint of a constraint condition set, a target centroid position change coefficient that meets the change relationship — S504

Determine a target motion control parameter according to the target centroid position change coefficient and the foothold of each foot end — S505

Control, based on the target motion control parameter, the legged robot to perform motion according to the motion path — S506

FIG. 5

FIG. 6

FIG. 7

800

FIG. 8

FIG. 9

## INTERNATIONAL SEARCH REPORT

| International application No. |
|---|
| **PCT/CN2021/102721** |

**A. CLASSIFICATION OF SUBJECT MATTER**

G05D 1/08(2006.01)i; G05B 19/19(2006.01)i

According to International Patent Classification (IPC) or to both national classification and IPC

**B. FIELDS SEARCHED**

Minimum documentation searched (classification system followed by classification symbols)

G05D1 G05B19

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; IEEE; Elsevier Science: 腾讯, 机器人, 足, 脚, 仿人, 仿生, 落足点, 落脚点, 路径, 轨迹, 质心, 接触力, 约束, 目标函数, 优化, 拟合, 关节, robot?, leg+, foot, feet, biped, humanoid, touch+, location, COM, center of mass, trajectory, constraint?, limit+, optimiz+, joints

**C. DOCUMENTS CONSIDERED TO BE RELEVANT**

| Category* | Citation of document, with indication, where appropriate, of the relevant passages | Relevant to claim No. |
|---|---|---|
| PX | CN 112114589 A (TENCENT TECHNOLOGY SHENZHEN CO., LTD.) 22 December 2020 (2020-12-22)<br>description, paragraphs [0004]-[0343], and figures 1-9 | 1-14 |
| PX | CN 112051797 A (TENCENT TECHNOLOGY SHENZHEN CO., LTD.) 08 December 2020 (2020-12-08)<br>description, paragraphs [0004]-[0356], and figures 1-9 | 1-14 |
| Y | CN 111506094 A (TENCENT TECHNOLOGY SHENZHEN CO., LTD.) 07 August 2020 (2020-08-07)<br>description, paragraphs [0046]-[0326], and figures 1-15 | 1-14 |
| Y | CN 108333931 A (BEIJING INSTITUTE OF TECHNOLOGY) 27 July 2018 (2018-07-27)<br>description, paragraphs [0008]-[0141], and figures 1-10 | 1-14 |
| A | CN 106826813 A (HANGZHOU YUXIN ROBOT TECHNOLOGY CO., LTD.) 13 June 2017 (2017-06-13)<br>entire document | 1-14 |
| A | CN 110597267 A (CHANG'AN UNIVERSITY) 20 December 2019 (2019-12-20)<br>entire document | 1-14 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 September 2021** | **22 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/102721**

**C.      DOCUMENTS CONSIDERED TO BE RELEVANT**

| Category* | Citation of document, with indication, where appropriate, of the relevant passages | Relevant to claim No. |
|---|---|---|
| A | US 10081104 B1 (GOOGLE INC. et al.) 25 September 2018 (2018-09-25)<br>entire document | 1-14 |

**INTERNATIONAL SEARCH REPORT**
Information on patent family members

International application No.

**PCT/CN2021/102721**

| Patent document cited in search report | | | Publication date (day/month/year) | Patent family member(s) | | | Publication date (day/month/year) |
|---|---|---|---|---|---|---|---|
| CN | 112114589 | A | 22 December 2020 | None | | | |
| CN | 112051797 | A | 08 December 2020 | None | | | |
| CN | 111506094 | A | 07 August 2020 | None | | | |
| CN | 108333931 | A | 27 July 2018 | CN | 108333931 | B | 02 October 2020 |
| CN | 106826813 | A | 13 June 2017 | CN | 106826813 | B | 23 August 2019 |
| CN | 110597267 | A | 20 December 2019 | None | | | |
| US | 10081104 | B1 | 25 September 2018 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020109273264